# FASCICULE DE BREVET EUROPEEN

(11) **EP 1 682 461 B1**
(45) Date de publication et mention de la délivrance du brevet: **09.11.2011**
(21) Numéro de dépôt: 04805773.1
(22) Date de dépôt: 22.10.2004
(51) Int. Cl.: C03C 25/26, C03C 25/36

(54) **COMPOSITION D ENCOLLAGE POUR PRODUIT ISOLANT A BASE DE LAINE MINERALE ET PRODUITS RESULTANTS**
SCHLICHTEZUSAMMENSETZUNG FÜR EIN ISOLIERENDES PRODUKT AUF BASIS VON MINERALWOLLE UND RESULTIERENDE PRODUKTE
SIZING COMPOSITION FOR AN INSULATING PRODUCT BASED ON MINERAL WOOL, AND RESULTING PRODUCTS

(30) Priorité: 05.11.2003 FR 0312973
(43) Date de publication de la demande: 26.07.2006
(73) Titulaire: SAINT-GOBAIN ISOVER, 92400 Courbevoie (FR)
(72) Inventeur: ESPIARD, Philippe, F-60270 Gouvieux (FR); Lesieur Isabelle, 95430 Auvers sur Oise (FR); Mahieuxe Bruno, 60290 Neuilly sous Clermont (FR)
(74) Mandataire: Jamet, Vincent
(86) Numéro de dépôt international: PCT/FR2004/050530
(87) Numéro de publication internationale: WO 2005/044750

(56) Documents cités:
- EP-A- 0 369 848
- US-A- 3 679 645
- US-A- 3 901 833

## Description

La présente invention se rapporte à la fabrication de produits isolants notamment thermiques et/ou acoustiques, à base de laine minérale. Plus précisément, elle concerne une composition d'encollage améliorée à base d'une résine époxy permettant d'augmenter la résistance mécanique après vieillissement de tels produits, notamment en milieu humide.

Les produits isolants à base de laine minérale, notamment de verre ou de roche, se présentent généralement sous la forme de panneaux plus ou moins rigides, de coquilles, de feutres enroulés ou encore de voiles. Ils sont destinés notamment à l'isolation thermique et/ou phonique de bâtiments.

La fabrication de ces produits comprend une première étape de fabrication de la laine elle-même, notamment par la technique connue de l'étirage centrifuge dans laquelle la matière minérale fondue est transformée en filaments, et une étape de mise en forme dans laquelle les filaments sont étirés et entraînés vers un organe récepteur par un courant gazeux ayant une vitesse et une température élevées, pour y former une nappe. Pour assurer la cohésion de la nappe, on projette sur la laine lors de son trajet vers l'organe récepteur, une composition d'encollage qui contient une résine thermodurcissable. La nappe ainsi conditionnée est ensuite soumise à un traitement thermique en étuve pour durcir la résine et obtenir un produit présentant les propriétés désirées telles que stabilité dimensionnelle, résistance à la traction, à l'arrachement et au poinçonnement, reprise d'épaisseur après compression et couleur homogène.

Dans le produit isolant, le liant a pour fonction de lier les fibres entre elles : il doit adhérer correctement au verre et se répartir de manière homogène sur les fibres pour ensuite se retrouver préférentiellement aux points de jonction entre les fibres et permettre d'obtenir une nappe fibreuse élastique.

La composition d'encollage est donc de préférence pulvérisée lorsque les fibres sont encore unitaires, c'est à dire avant la constitution de la nappe. En conséquence, l'encollage est pulvérisé dans la hotte de réception des fibres, en dessous des brûleurs générant le courant gazeux d'étirage. Il en résulte une interdiction d'utiliser des solvants organiques inflammables et/ou polluants pour la formulation de l'encollage, le risque d'incendie et/ou de pollution dans la hotte de réception étant trop important.

De plus, la résine servant de liant si elle ne doit pas polymériser trop rapidement avant la mise en forme de la nappe, doit aussi avoir un temps de polymérisation pas trop long. En contrôlant ce temps, on évite ainsi les risques de pré-gélification et on permet que la durée de polymérisation reste compatible avec des vitesses de production élevées, notamment en faisant en sorte que le liant soit complètement durci après le traitement dans l'étuve à haute température (de l'ordre de 260°C).

Les encollages les plus usités contiennent une résine thermodurcissable de type résol, obtenue par condensation de phénol et de formaldéhyde, ou équivalents, en présence d'un accélérateur basique, de l'eau en tant qu'agent de dilution, de l'urée qui sert à diminuer le taux de formaldéhyde libre et agit aussi comme liant, et divers additifs tels que de l'ammoniaque, de l'huile, des agents de couplage avec le verre, des colorants et éventuellement des charges.

Si ce type d'encollage permet d'obtenir un niveau de performances mécaniques élevées, sa mise en oeuvre notamment lors du traitement en étuve génère des émissions gazeuses indésirables par exemple du formaldéhyde, de l'ammoniac et d'autres composés organiques volatils.

Pour pallier cet inconvénient, il a été proposé des encollages à base de résine époxy du type éther glycidique et d'un durcisseur aminé non volatil (voir EP-A-0 369 848 et FR02/08873). Cette solution permet de réduire très sensiblement les émissions tant au niveau de la fabrication du produit isolant car la polymérisation totale peut être réalisée à une température plus faible (de l'ordre de 220°C) que de son utilisation à des températures élevées, supérieures à 150°C et jusqu'à 700°C.

S'il est important que les propriétés mécaniques du produit isolant soient satisfaisantes après la fabrication et jusqu'à son utilisation pour assurer de bonnes conditions de mise en place sur le chantier, il est également souhaitable que celles-ci soient préservées pendant un certain temps une fois le produit en place, pour lui garantir une durée de vie suffisante.

Pour la plupart, les produits d'isolation ont au cours de leur vieillissement à subir des cycles thermiques d'amplitude plus ou moins grande et des conditions de condensation variables qui les conduit à être exposés à l'humidité ce qui entraîne une perte de leurs propriétés mécaniques. Ces pertes peuvent être importantes lorsque la laine minérale est particulièrement sensible à l'eau, par exemple lorsqu'il s'agit d'une laine susceptible de se dissoudre en milieu physiologique.

L'invention a pour but de remédier à ces inconvénients et d'améliorer la résistance mécanique après vieillissement, notamment en milieu humide, de produits d'isolation à base de laine minérale pourvue d'un liant époxy, c'est à dire de permettre de réduire les pertes de propriétés mécaniques de ces produits après vieillissement, notamment en milieu humide.

Ce but est atteint selon l'invention grâce à une composition d'encollage à base d'une résine époxy du type éther glycidique et d'un durcisseur aminé, cette composition étant caractérisée en ce qu'elle comprend en outre un accélérateur choisi parmi les imidazoles, les imidazolines et leurs mélanges.

Le terme « accélérateur » a ici la signification usuelle dans le domaine de la chimie et désigne un composé permettant d'augmenter la vitesse de réaction entre la résine époxy et le durcisseur aminé.

L'encollage permet de réduire de façon remarquable les pertes de propriétés après vieillissement, en particulier humide, par rapport à un produit semblable ne contenant pas l'accélérateur, sans modification significative de ces propriétés juste après la fabrication.

Un autre objet de l'invention concerne un procédé de fabrication d'un produit isolant mettant en oeuvre la composition d'encollage précitée.

L'invention a encore pour objet les produits isolants revêtus de ladite composition d'encollage.

La résine époxy conforme à l'invention est obtenue par réaction d'épichlorhydrine et d'un alcool. De préférence, l'alcool est un polyol comprenant au moins 2 fonctions hydroxyles et au plus 100 fonctions hydroxyles par molécule, de préférence au plus 50, et mieux encore au plus 10. De manière particulièrement préférée, l'alcool est un diol.

De manière avantageuse, la résine présente une valeur EEW (Epoxy Equivalent Weight ) correspondant à la masse de résine, en grammes, contenant 1 équivalent-gramme de fonction époxyde qui est comprise entre 150 et 2000, de préférence entre 160 et 700 et mieux encore au plus égale à 300. Une telle résine présente l'avantage de générer une faible quantité d'émissions indésirables au cours du fibrage et du traitement ultérieur dans l'étuve et reste par ailleurs compatible avec les procédés connus de pulvérisation de l'encollage sur les fibres en vue de former des produits isolants.

De manière avantageuse encore, la résine présente une fonctionnalité (nombre d'époxydes par molécule) au moins égale à 2 et de préférence inférieure à 10.

La résine époxy conforme à l'invention est dispersable dans de l'eau ou susceptible d'être mise en émulsion en présence d'un agent émulsifiant ou d'un agent dispersant. Il est en effet indispensable que la résine ait l'une au moins de ces propriétés afin que la composition d'encollage puisse être pulvérisée dans de bonnes conditions. A cet égard, l'aptitude à la pulvérisation est conditionnée par la diluabilité à l'eau de la résine que l'on définit de la manière suivante : la diluabilité à l'eau d'une émulsion ou d'une dispersion de résine époxy est le volume d'eau déionisée que l'on peut, à une température donnée, ajouter à l'unité de volume de cette composition avant de « casser » l'émulsion ou la dispersion, c'est-à-dire de déstabiliser ladite émulsion ou dispersion ou d'avoir une séparation des phases. La diluabilité à l'eau d'une résine apte à être utilisée dans une composition d'encollage pulvérisable est avantageusement au moins égale à 500 % à 20°C, de préférence 1000 %.

De préférence, la résine époxy est choisie parmi les résines résultant de la réaction entre l'épichlorhydrine et le bisphénol A, le bisphénoi F, les polyéthylèneglycols, le glycérol, le pentaérythritol et les résines novolaques et les mélanges de ces résines. Les résines formées par réaction entre l'épichlorhydrine et le bisphénol A sont particulièrement préférées.

A titre d'exemple de telles résines, on peut citer :
- les résines en émulsion dans l'eau commercialisées par la société RESOLUTION sous la dénomination Epi-Rez^{®} 5003-w-55 (EEW = 195-215), Epi-Rez^{®} 3510-w-60 (EEW = 185-215), Epi-Rez^{®} 3515-w-60 (EEW = 225-275), et Epi-Rez^{®}3522-w-60 (EEW = 615-715).
- les résines émulsionnables dans l'eau commercialisées par la société RESOLUTION sous la dénomination Epikote^{®} 828 (EEW = 184-190), et Epikote^{®} 255 (EEW = 193-205) ou par la société DOW CHEMICAL sous la dénomination DER 330 (EEW =176-185) ou DER 331 (EEW = 182-192).

D'autres composés époxy du type éther glycidique peuvent être ajoutés à la composition d'encollage. A titre d'exemple, on peut citer les composés aliphatiques époxydés et les alcools gras époxydés utiles notamment pour adapter la viscosité de l'encollage, et les résines époxy du type éther glycidique halogénées, notamment dérivées d'éthers glycidiques de dibromophényle, tels que le dibromophényl glycidyl éther, le 2-méthyl-4,6-dibromophényl glycidyl éther, le 4-méthyl-2,6-dibromophényl glycidyl éther et le 4-cumyl-2,6-dibromophényl glycidyl éther qui permettent notamment de donner au produit une meilleure résistance aux températures élevées. La teneur en ces composés représente généralement moins de 30 % du poids de la résine époxy, de préférence moins de 10 %.

Le durcisseur aminé conforme à l'invention est généralement choisi parmi les polyamines aliphatiques telles que la diéthylènetriamine (DETA), la triéthylènetétramine (TETA), la tétraéthylènepentamine (TEPA) et les polyglycoldiamines, les polyamines cycloaliphatiques telles que le 1,3-bis(aminométhyl)cydohexane, le 4,4-diaminocyclohexylméthane, la méthylènediamine et le 2,4-diaminocyclohexanol, les polyamines aromatiques telles que la m-phénylènediamine, la m-xylylènediamine, la diéthyltoluènediamine, la diamino-diphénylsulfone et la dicyandiamine.

La quantité de durcisseur aminé à introduire dans la composition d'encollage dépend du nombre de sites réactifs aminés portés par la molécule. De préférence, le durcisseur a un poids équivalent amine/H défini par le rapport du poids moléculaire de l'amine au nombre d'atomes d'hydrogène actifs qui est compris entre 20 et 300. De préférence, la quantité de durcisseur est introduit en quantité stoechiométrique par rapport à la résine afin d'éviter un excès de durcisseur pouvant conduire à l'émission de produits volatils au niveau du tapis de réception des fibres et/ou de l'étuve.

De préférence encore, le durcisseur est non volatil c'est à dire que dans les conditions de la pulvérisation, il n'est pas susceptible de produire une auto-inflammation. Le point éclair du durcisseur est avantageusement supérieur à 150°C, et mieux encore supérieur à 180°C.

La composition d'encollage comprend en outre un accélérateur choisi parmi les imidazoles, les imidazolines et leurs mélanges. Le choix de l'accélérateur au sein d'une famille limitée de composés permet d'atteindre les performances en terme de résistance au vieillissement, notamment en milieu humide.

A titre d'exemples d'imidazoles, on peut citer l'imidazole, le 1-méthylimidazole, le 2-méthylimidazole, le 2-phénylimidazole, le 2-éthyl-4-méthylimidazole et le 4,4'-méthylènebis(2-éthyl-5-méthylimidazole).

A titre d'exemple d'imidazoline, on peut citer la 2-éthyl-N-phénylimidazoline.

De préférence, on utilise le 2-méthylimidazole.

De manière générale, l'accélérateur est introduit dans la composition d'encollage à raison de 0,1 à 5 parties en poids de matière sèche pour 100 parties en poids de matière sèche de résine époxy et de durcisseur, de préférence 0,5 à 3 parties, et mieux encore 0,5 à 2 parties.

La composition d'encollage peut comprendre en outre les additifs suivants, pour 100 parties en poids de matière sèche de résine et de durcisseur :
- 0 à 2 parties d'un agent de couplage, tel qu'un silane, de préférence de l'ordre de 0,5 partie,
- 0 à 20 parties d'une huile, de préférence 6 à 15 parties.

Le rôle bien connu des additifs précités est brièvement rappelé ici :
- l'eau a un rôle de lubrifiant, permet d'ajuster la viscosité aux conditions de pulvérisation, de refroidir les fibres et de limiter les phénomènes de pré-gélification,
- l'agent de couplage assure la liaison entre la fibre minérale et le liant polymérisé. Il permet de renforcer les propriétés mécaniques et contribue à l'amélioration de la résistance au vieillissement Le silane est généralement un aminosilane, de préférence le γ-aminopropyltriéthoxysilane,
- l'huile assure la lubrification des fibres, permet de réduire les poussières susceptibles d'être générées lors de la manipulation des produits finis (nappes isolantes par exemple) et améliore la sensation au toucher. Elle est généralement inerte vis à vis des autres constituants et apte à être émulsionnée dans l'eau. Le plus souvent, il s'agit d'une huile constituée d'hydrocarbures extraits du pétrole.

L'invention a également pour objet un procédé de fabrication d'un produit isolant thermique et/ou acoustique, à base de laine minérale pourvue d'un liant épox, présentant une meilleure résistance mécanique après vieillissement, notamment en milieu humide, procédé selon lequel
a) on forme des fibres minérales à partir d'une composition de matière minérale fondue,
b) on pulvérise sur les fibres obtenues sous a) une composition d'encollage comprenant une résine époxy du type éther glycidique, un durcisseur aminé et un accélérateur choisi parmi les imidazoles, les imidazolines et leurs mélanges,
c) on collecte les fibres sous la forme d'une nappe, et
d) on soumet la nappe à un traitement thermique à une température inférieure à environ 260°C, de préférence de l'ordre de 220 à 240°C.

De manière générale, il est nécessaire que la composition d'encollage ait une durée de vie (« pot life » en anglais) compatible avec les conditions de la pulvérisation et qu'elle ne durcisse pas avant la mise en forme de la nappe. Cela signifie, en d'autres termes, que la pré-gélification de l'encollage doit être aussi faible que possible.

Etant donnée que la vitesse de réaction entre les fonctions amines du durcisseur et les fonctions époxydes augmente très rapidement en présence de l'accélérateur, la préparation de l'encollage par mélange, même extemporané, de la résine époxy, du durcisseur aminé et de l'accélérateur, le cas échéants des additifs, préalablement à la pulvérisation est à éviter pour prévenir tout risque de colmatage au niveau de la couronne de pulvérisation.

On préfère effectuer la pulvérisation de l'encollage sur les fibres selon les deux variantes de réalisation suivantes.

Dans une première forme de réalisation, on mélange l'accélérateur avec les autres constituants de l'encollage, de préférence en amont de la couronne de pulvérisation et le plus tardivement possible, et on applique l'encollage de la manière usuelle sur la laine minérale. Cette forme de réalisation est avantageuse lorsque la vitesse de réaction de la résine époxy et du durcisseur aminé est suffisamment faible et n'entraîne pas une gélification précoce pouvant conduire au colmatage total ou partiel des moyens de pulvérisation.

Selon une première variante, l'accélérateur est introduit dans le mélange des autres constituants de l'encollage, lesquels constituants pouvant être amenés séparément ou avoir été préalablement mélangés (pré-mélange). On préfère introduire l'accélérateur dans un pré-mélange contenant l'ensemble des autres constituants de l'encollage.

Selon une deuxième variante, on réalise un premier mélange de l'accélérateur et du durcisseur aminé et un deuxième mélange de la résine époxy et des autres constituants de l'encollage, puis on introduit lesdits premier et deuxième mélanges avant la couronne de pulvérisation.

Dans une deuxième forme de réalisation préférée, valable même lorsque la réactivité de l'encollage est faible, on applique l'accélérateur de manière séparée de la pulvérisation des autres constituants de l'encollage sur les fibres. Par exemple, on peut pulvériser l'accélérateur en phase aqueuse au voisinage de la couronne de pulvérisation des autres constituants de l'encollage, notamment en superposant deux couronnes de pulvérisation sur le trajet de la laine minérale en direction de l'organe de réception, une couronne (de préférence la première dans le sens de progression de la laine) pulvérisant l'accélérateur et la deuxième pulvérisant les autres constituants de l'encollage.

Les produits isolants obtenus conformément à l'une ou l'autre forme de réalisation, lesquels constituent également un objet de l'invention, contiennent 0,5 à 15 %, de préférence 1 à 12 % en poids de liant polymérisé par rapport au poids total des fibres minérales. Sous sa forme réticulée, le liant est solide, infusible et insoluble dans l'eau.

Les produits obtenus sont de couleur blanche si aucun colorant n'a été ajouté.

Les produits isolants obtenus peuvent avoir l'aspect d'une nappe ou d'un voile. Ils peuvent se présenter sous la forme d'un panneau de rigidité variable, d'une coquille, ou d'un enroulement (feutre ou voile). Le cas échéant, au moins une de leurs faces est revêtue d'une couche ou d'un film assurant la protection de la laine minérale, par exemple un voile de fibres minérales, de préférence en verre, ou une feuille de papier kraft. De manière particulièrement préférée, le voile de fibres a un grammage compris entre 10 et 300 g/m² et il comprend au moins 1 % en poids, de préférence au moins 2 % et avantageusement au moins 4 % de liant polymérisé obtenu à partir de l'encollage selon l'invention.

Les produits obtenus dans le cadre de la présente invention sont notamment destinés à former des isolants thermiques et/ou acoustiques, en particulier pour le bâtiment et les applications imposant une résistance importante aux températures élevées (coquilles industrielles et fours ménagers. Ils peuvent également servir de substrats pour la culture hors sol.

Les exemples suivants, non limitatifs, permettent d'illustrer l'invention.

### EXEMPLE

On fabrique de la laine de verre par la technique de la centrifugation interne dans laquelle la composition de verre fondu est transformée en fibres au moyen d'un outil dénommé assiette de centrifugation, comprenant un panier formant chambre de réception de la composition fondue et une bande périphérique percée d'une multitude d'orifices : l'assiette est mue en rotation autour de son axe de symétrie disposé verticalement, la composition est éjectée à travers les orifices sous l'effet de la force centrifuge et la matière s'échappant des orifices est étirée en fibres avec l'assistance d'un courant de gaz d'étirage.

De façon classique, une couronne de pulvérisation d'encollage est disposée au-dessous de l'assiette de fibrage de façon à répartir régulièrement la composition d'encollage sur la laine de verre venant d'être formée.

La laine minérale ainsi encollée est collectée sur un convoyeur à bande équipé de caissons d'aspiration internes qui retiennent la laine minérale sous forme d'un feutre ou d'une nappe à la surface du convoyeur. Le convoyeur circule ensuite dans une étuve maintenue à 220°C où la résine de l'encollage est polymérisée pour former un liant.

La composition de l'encollage est la suivante (en parties en poids de matière sèche) :

| | |
|---|---|
| - résine époxy du type éther glycidique : Epi-Rez^{®} 3510-w-60 ; RESOLUTION | 85 parties |
| - durcisseur : tétraéthylènepentamine (TEPA) | 15 parties |
| - accélérateur : 2-méthylimidazole | 1 partie |
| - agent de couplage : Silquest^{®}A1100 ; CROMPTON | 0,5 partie |
| - huile : Mulrex^{®} 88 ; MOBIL | 9,5 parties |

La composition d'encollage est pulvérisée dans les conditions suivantes : on réalise un premier mélange comprenant la résine, l'agent de couplage et l'huile et un deuxième mélange comprenant le durcisseur et l'accélérateur. Ces deux mélanges sont amenés séparément vers la couronne de pulvérisation et sont réunis juste avant leur introduction dans ladite couronne. Le débit de pulvérisation est adapté pour déposer de l'ordre de 5 % en poids de matière sèche par rapport au poids de la laine de verre.

Deux essais de référence sont réalisés avec un encollage ne contenant pas d'accélérateur, le premier étant traité dans une étuve à 220°C (Référence 1) et le deuxième à une température de 260°C (Référence 2).

Un autre essai de référence est encore réalisé avec un encollage contenant le 2,4,6-tri(diméthylaminométhyl)phénol en tant qu'accélérateur (Référence 3).

Sur le produit obtenu, on mesure la Résistance en Traction après la fabrication (RTfab), et après un vieillissement accéléré dans un autoclave à une température de 105°C sous 100 % d'humidité relative pendant 15 minutes (RT15) ou 45 minutes (RT45).

La résistance en traction RT est mesurée selon la norme ASTM C 686-71T sur un échantillon découpé par estampage dans le produit isolant. L'échantillon a la forme d'un tore de 122 mm de longueur, 46 mm de largeur, un rayon de courbure de la découpe du bord extérieur égal à 38 mm et un rayon de courbure de la découpe du bord intérieur égal à 12,5 mm.

L'échantillon est disposé entre deux mandrins cylindriques d'une machine d'essais dont l'un est mobile et se déplace à vitesse constante. On mesure la force de rupture F (en gramme-force) de l'échantillon et on calcule la résistance en traction RT définie par le rapport de la force de rupture F à la masse de l'échantillon.

Les résultats figurent dans le tableau 1 , qui indique pour chaque essai le pourcentage de perte de la résistance en traction par rapport à l'état initial après fabrication, et le pourcentage d'amélioration par rapport à la référence sans accélérateur (valeur entre parenthèses).

Sur le produit obtenu, on mesure la reprise en épaisseur qui permet d'évaluer la bonne tenue dimensionnelle. On procède comme suit : le produit est comprimé avec un taux de compression (défini comme étant le rapport de l'épaisseur nominale à l'épaisseur sous compression) égal à 6/1 pendant 1, 12 et 30 jours. La reprise en épaisseur correspond au rapport de l'épaisseur après compression à l'épaisseur nominale (exprimée en %). Les résultats sont donnés dans le Tableau 1.

**Tableau 1**

| | **RTfab** | **RT15 (gForce/g)** | **Perte (%)** | **RT45 (gForce/g)** | **Perte (%)** | **Reprise en épaisseur (%)** | | |
|---|---|---|---|---|---|---|---|---|
| | | | | | | **1 j** | **12 j** | **30 j** |
| **Exemple** | 302 | 204 | 32,5 | 167 | 44,7 | 140 | 138 | 137 |
| | (-4,4 %) | (+25,9 %) | | (+51,8 %) | | | | |
| **Ref.1** | 316 | 162 | 48,7 | 110 | 65,2 | 137 | 136 | 136 |
| **Ref. 2** | 300 | 159 | 47,0 | 120 | 60,0 | 140 | 137 | 136 |
| **Ref. 3** | 301] | 147 | 51,1 | 110] | 63,5 | 141 | 139 | 138 |
| **Ref. 4** | 327 | 253 | 22,2 | 208 | 36,0 | 143 | 137 | 137 |

Les résultats du Tableau 1 montrent que le produit selon l'invention (Exemple) a une résistance en traction améliorée par rapport au produit équivalent sans accélérateur (Référence 1) ;le pourcentage de perte après vieillissement est moins important que ce soit après 15 ou 45 minutes de traitement en autoclave.

Par rapport au produit sans accélérateur, l'amélioration de la résistance en traction sur les produits fortement vieillis est égale à 51,8 % ce qui représente un gain très substantiel.

On note que la présence du catalyseur ne dégrade pas les propriétés des produits selon l'invention, que ce soit au niveau de la résistance en traction après la fabrication (RTfab) ou de la reprise en épaisseur.

On n'obtient pas d'amélioration de la résistance en traction avec l'accélérateur conventionnel de la Référence 3. L'augmentation de la température de polymérisation (Référence 2) ne permet pas non plus d'obtenir une meilleure résistance en traction après vieillissement. A titre de comparaison, on a indiqué sur le Tableau 1 les valeurs de résistance en traction et de reprise en épaisseur d'un produit standard traité avec un encollage incorporant une résine formo-phénolique classique dans une étuve à 260°C (Référence 4).

L'encollage a la composition suivante (en parties en poids) :

| | |
|---|---|
| - résine phénol-formaldéhyde | 55 parties |
| - urée | 45 parties |
| - agent de couplage (Silquest^{®} A 1100) | 0,5 partie |
| - huile (Mulrex^{®} 88) | 9 parties |
| - sulfate d'ammonium | 3 parties |
| - ammoniaque (solution à 20 %) | 6 parties |

La résine phénolique est du type de celles décrites dans EP-A-0 148 050.

Le produit selon l'invention n'a pas le niveau de performances de celui qui contient une résine phénolique ; néanmoins, il constitue un bon compromis car il concilie une bonne résistance au vieillissement notamment en milieu humide, un niveau très bas d'émissions de gaz indésirables (ce qui n'est pas le cas des résines phénoliques qui libèrent du formol) et un coût en énergie plus faible grâce à l'usage d'étuves fonctionnant à plus basse température.

## Revendications

1. Composition d'encollage aqueuse pour produits isolants à base de laine minérale, notamment de verre ou de roche, comprenant une résine époxy du type éther glycidique et un durcisseur aminé, **caractérisée en ce qu'**elle comprend en outre un accélérateur choisi parmi les imidazoles, les imidazolines et leurs mélanges.

2. Composition selon la revendication 1, **caractérisée en ce que** l'accélérateur est l'imidazole, le 1-méthylimidazole, le 2-méthylimidazole, le 2-phénylimidazole, le 2-éthyl-4-méthylimidazole, le 4,4'-méthylènebis(2-éthyl-5-méthylidazole) et la 2-éthyl-N-phénylimidazoline.

3. Composition selon la revendication 1 ou 2, **caractérisée en ce que** la résine époxy est obtenue par réaction d'épichlorhydrine et d'un alcool, de préférence un polyol.

4. Composition selon l'une des revendications 1 à 3, **caractérisée en ce que** la résine présente une valeur EEW (Epoxy Equivalent Weight ) comprise entre 150 et 2000, de préférence entre 160 et 700 et mieux encore au plus égale à 300.

5. Composition selon l'une des revendications 1 à 4, **caractérisée en ce que** la résine époxy présente une diluabilité à l'eau, à 20°C, au moins égale à 500 %, de préférence 1000 %.

6. Composition selon l'une des revendications 1 à 5, **caractérisée en ce que** le durcisseur est choisi parmi les polyamides aliphatiques telles que la diéthylènetriamine (DETA), la triéthylènetétramine (TETA), la tétraéthylènepentamine (TEPA) et les polyglycoldiamines, les polyamines cycloaliphatiques telles que le 1,3-bis(aminométhyl)cyclohexane, le 4,4-diaminocyclohexylméthane, la méthylènediamine et le 2,4-diaminocyclohexanol, les polyamines aromatiques telles que la m-phénylènediamine, la m-xylylènediamine, la diéthyltoluènediamine, la diaminodiphénylsulfone et la dicyandiamine.

7. Composition selon l'une des revendications 1 à 6, **caractérisée en ce qu'**elle comprend l'accélérateur à raison de 0,1 à 5 parties en poids de matière sèche pour 100 parties en poids de matière sèche de résine époxy et de durcisseur.

8. Composition selon l'une des revendications 1 à 7, **caractérisée en ce que** le durcisseur a un poids équivalent amine/H compris entre 20 et 300.

9. Composition selon l'une des revendications 1 à 8, **caractérisée en ce qu'**elle comprend en outre les additifs suivants, pour 100 parties en poids de matière sèche de résine et dedurcisseur :
- 0 à 2 parties d'un agent de couplage, tel qu'un silane, de préférence de l'ordre de 0,5 partie,
- 0 à 20 parties d'une huile, de préférence 6 à 15 parties.

10. Procédé de fabrication d'un produit isolant thermique et/ou acoustique, à base de laine minérale, selon lequel
a) on forme des fibres minérales à partir d'une composition de matière minérale fondue,
b) on pulvérise sur les fibres obtenues sous a) une composition d'encollage selon l'une des revendications 1 à 9,
c) on collecte les fibres sous la forme d'une nappe, et
d) on soumet la nappe à un traitement thermique à une température inférieure à environ 260°C, de préférence de l'ordre de 220 à 240°C.

11. Procédé selon la revendication 10, **caractérisé en ce qu'**on mélange de l'accélérateur avec les autres constituants de l'encollage avant la pulvérisation sur les fibres.

12. Procédé selon la revendication 10, **caractérisé en ce qu'**on applique l'accélérateur de manière séparée de la pulvérisation des autres constituants de l'encollage sur les fibres.

13. Produit isolant thermique et/ou acoustique, à base de laine minérale, notamment de verre ou de roche, pourvue d'une composition d'encollage selon l'une des revendications 1 à 9.

14. Produit selon la revendication 13, **caractérisé en ce que** la le poids total de liant polymérisé représente 0.5 à 15 % du poids total des fibres minérales, de préférence 1 à 12 %.

15. Produit selon la revendication 13 ou 14, **caractérisé en ce qu'**il comprend en outre un voile de fibres minérales, notamment de fibres de verre, ayant un grammage compris entre 10 et 300 g/m² disposé sur au moins une des faces extérieures dudit produit et **en ce que** ledit voile comprend au moins 1 % en poids de liant polymérisé obtenu à partir de l'encollage selon l'une des revendications 1 à 9.

16. Utilisation de la composition d'encollage selon l'une des revendications 1 à 9 pour l'amélioration de la résistance mécanique après vieillissement, notamment en milieu humide, de produits isolants à base de laine minérale.

17. Utilisation selon la revendication 15, **caractérisée en ce que** la laine est de la laine de verre ou de roche.

## Claims

1. Aqueous sizing composition for insulation products based on mineral wool, especially glass or rock wool, comprising an epoxy resin of the glycidyl ether type and an amine hardener, **characterized in that** it furthermore includes an accelerator chosen from imidazoles, imidazolines and mixtures thereof.

2. Composition according to Claim 1, **characterized in that** the accelerator is imidazole, 1-methylimidazole, 2-methylimidazole, 2-phenylimidazole, 2-ethyl-4-methylimidazole, 4,4'-methylenebis(2-ethyl-5-methylimidazole) or 2-ethyl-N-phenylimidazoline.

3. Composition according to Claim 1 or 2, **characterized in that** the epoxy resin is obtained by the reaction of epichlorohydrin with an alcohol, preferably a polyol.

4. Composition according to one of Claims 1 to 3, **characterized in that** the resin has an EEW (Epoxy Equivalent Weight) of between 150 and 2000, preferably between 160 and 700 and better still at most equal to 300.

5. Composition according to one of Claims 1 to 4, **characterized in that** the epoxy resin has a water dilutability, at 20°C, of at least 500%, preferably 1000%.

6. Composition according to one of Claims 1 to 5, **characterized in that** the hardener is chosen from aliphatic polyamines, such as diethylenetriamine (DETA), triethylenetetramine (TETA), tetraethylenepentamine (TEPA) and polyglycoldiamines, cycloaliphatic polyamines, such as 1,3-bis(aminomethyl)cyclohexane, 4,4-diaminocyclohexylmethane, methylenediamine and 2,4-diaminocyclohexanol, and aromatic polyamines, such as m-phenylenediamine, m-xylylenediamine, diethyltoluenediamine, diaminodiphenylsulphone and dicyandiamine.

7. Composition according to one of Claims 1 to 6, **characterized in that** it contains the accelerator in an amount of 0.1 to 5 parts by weight of dry matter per 100 parts by weight of dry matter of epoxy resin and of hardener.

8. Composition according to one of Claims 1 to 7, **characterized in that** the hardener has an amine equivalent weight/H ratio of between 20 and 300.

9. Composition according to one of Claims 1 to 8, **characterized in that** it furthermore includes the following additives, per 100 parts by weight of dry matter of resin and of hardener:
- 0 to 2 parts, preferably around 0.5 part, of a coupling agent such as a silane;
- 0 to 20 parts, preferably 6 to 15 parts, of an oil.

10. Process for manufacturing a thermal and/or acoustic insulation product, based on mineral wool, in which:
a) mineral fibres are formed from a molten mineral composition;
b) a sizing composition according to one of Claims 1 to 9 is sprayed onto the fibres obtained at a);
c) the fibres are collected in the form of a sheet; and
d) the sheet is subjected to a heat treatment at a temperature below about 260°C, preferably around 220 to 240°C.

11. Process according to Claim 10, **characterized in that** the accelerator is mixed with the other constituents of the size before being sprayed onto the fibres.

12. Process according to Claim 10, **characterized in that** the accelerator is applied separately from the spraying of the other constituents of the size onto the fibres.

13. Thermal and/or acoustic insulation product based on mineral wool, especially glass or rock wool, provided with a sizing composition according to one of Claims 1 to 9.

14. Product according to Claim 13, **characterized in that** the total weight of cured binder represents from 0.5 to 15%, preferably 1 to 12% of the total weight of mineral fibres.

15. Product according to Claim 13 or 14, **characterized in that** it furthermore includes a veil of mineral fibres, especially glass fibres, having a weight of between 10 and 300 g/m², placed on at least one of the external faces of the said product and **in that** the said veil comprises at least 1% by weight of cured binder obtained from the sizing composition according to one of Claims 1 to 9.

16. Use of the sizing composition according to one of Claims 1 to 9 for improving the mechanical strength after ageing, especially in a wet environment, of insulation products based on mineral wool.

17. Use according to Claim 15, **characterized in that** the wool is glass wool or rock wool.

## Patentansprüche

1. Wässrige Bindemittelzusammensetzung für Isolationsprodukte auf Mineralwollebasis, insbesondere aus Glas oder Stein, umfassend ein Epoxidharz vom Glycidethertyp und einen Aminhärter, **dadurch gekennzeichnet, dass** diese weiterhin einen Beschleuniger ausgewählt aus Imidazolen, Imidazolinen und deren Mischungen umfasst.

2. Zusammensetzung nach Anspruch 1, **dadurch gekennzeichnet, dass** der Beschleuniger Imidazol, 1-Methylimidazol, 2-Methylimidazol, 2-Phenylimidazol, 2-Ethyl-4-methylimidazol, 4,4'-Methylenbis(2-ethyl-5-methylimidazol) und 2-Ethyl-N-phenylimidazolin ist.

3. Zusammensetzung nach Anspruch 1 oder 2, **dadurch gekennzeichnet, dass** das Epoxidharz durch Umsetzung von Epichlorhydrin mit einem Alkohol, bevorzugt einem Polyol, erhalten wird.

4. Zusammensetzung nach einem der Ansprüche 1 bis 3, **dadurch gekennzeichnet, dass** das Harz einen EEW-Wert (Epoxy Equivalent Weight) von 150 bis 2000, bevorzugt von 160 bis 700, und noch mehr bevorzugt von höchstens 300, hat.

5. Zusammensetzung nach einem der Ansprüche 1 bis 4, **dadurch gekennzeichnet, dass** das Epoxidharz bei 20 °C eine Wasserverdünnbarkeit von wenigstens 500%, bevorzugt 1000%, hat.

6. Zusammensetzung nach einem der Ansprüche 1 bis 5, **dadurch gekennzeichnet, dass** der Härter ausgewählt ist aus aliphatischen Polyamiden wie Diethylentriamin (DETA), Triethylentetramin (TETA), Tetraethylenpentamin (TEPA) und Polyglykoldiaminen, zykloaliphatischen Polyaminen wie 1,3-Bis(Aminomethyl)zyklohexan, 4,4-Diaminozyklohexylmethan, Methylendiamin und 2,4-Diaminozyklohexanol, aromatischen Polyaminen wie m-Phenylendiamin, m-Xylylendiamin, Diethyltoluoldiamin, Diaminodiphenylsulfon und Dicyandiamin.

7. Zusammensetzung nach einem der Ansprüche 1 bis 6, **dadurch gekennzeichnet, dass** sie 0,1 bis 5 Gewichtsteile Beschleunigertrockenmasse bezogen auf 100 Gewichtsteile Epoxidharz- und Härtertrockenmasse umfasst.

8. Zusammensetzung nach einem der Ansprüche 1 bis 7, **dadurch gekennzeichnet, dass** der Härter ein Amin/H-Äquivalentgewicht von 20 bis 300 hat.

9. Zusammensetzung nach einem der Ansprüche 1 bis 8, **dadurch gekennzeichnet, dass** sie weiterhin die folgenden Additive, bezogen auf 100 Gewichtsteile Harzund Härtertrockenmasse, umfasst:
- 0 bis 2 Teile, bevorzugt etwa 0,5 Teile, eines Kupplungsreagenzes wie ein Silan,
- 0 bis 20 Teile, bevorzugt 6 bis 15 Teile, eines Öles.

10. Verfahren zur Herstellung eines thermischen und/oder akustischen Isolationsproduktes basierend auf Mineralwolle, wonach:
a) ausgehend von einer Zusammensetzung aus geschmolzenem mineralischem Material Mineralfasern hergestellt werden,
b) eine Bindemittelzusammensetzung nach einem der Ansprüche 1 bis 9 auf den in a) erhaltenen Fasern versprüht wird,
c) die Fasern in Form einer Matte gesammelt werden, und
d) die Matte einer Temperaturbehandlung bei einer Temperatur von weniger als etwa 260 °C, bevorzugt in einem Bereich von 220 bis 240 °C, unterzogen wird.

11. Verfahren nach Anspruch 10, **dadurch gekennzeichnet, dass** der Beschleuniger vor dem Versprühen auf den Fasern mit den weiteren Bestandteilen des Bindemittels vermischt wird.

12. Verfahren nach Anspruch 10, **dadurch gekennzeichnet, dass** der Beschleuniger getrennt von dem Versprühen der anderen Bindemittelbestandteile auf den Fasern aufgebracht wird.

13. Thermisches und/oder akustisches Isolationsprodukt basierend auf Mineralwolle, insbesondere aus Glas oder Stein, das mit einer Bindemittelzusammensetzung nach einem der Ansprüche 1 bis 9 versehen ist.

14. Produkt nach Anspruch 13, **dadurch gekennzeichnet, dass** das Gesamtgewicht des polymerisierten Binders 0,5 bis 15%, bevorzugt 1 bis 12%, des Gesamtgewichts der Mineralfasern ist.

15. Produkt nach Anspruch 13 oder 14, **dadurch gekennzeichnet**, das es weiterhin ein Mineralfaservlies, insbesondere Glasfasern, mit einer Grammatur von 10 bis 300 g/m² umfasst, die auf wenigstens einer der Außenseiten des Produkts aufgebracht ist und wobei das Vlies wenigstens 1 Gew.-% polymerisierten Binder umfasst, der ausgehend von dem Bindemittel nach einem der Ansprüche 1 bis 9 erhalten wurde.

16. Verwendung der Bindemittelzusammensetzung nach einem der Ansprüche 1 bis 9 zur Verbesserung der mechanischen Widerstandsfähigkeit nach Alterung, insbesondere in feuchter Umgebung, von Isolierprodukten auf Mineralwollebasis.

17. Verwendung nach Anspruch 15, **dadurch gekennzeichnet, dass** die Wolle Glasoder Steinwolle ist.
